# EUROPEAN PATENT SPECIFICATION

(11) **EP 3 134 342 B1**
(45) Date of publication and mention of the grant of the patent: **18.12.2019**
(21) Application number: 14725019.5
(22) Date of filing: 22.04.2014
(51) Int. Cl.: B65H 55/04, G02B 6/44

(54) **SHIPPING CONTAINER FOR DELIVERING CABLES**
VERSANDBEHÄLTER ZUR LIEFERUNG VON KABELN
CONTENEUR D'EXPÉDITION POUR DÉLIVRER DES CÂBLES

(43) Date of publication of application: 01.03.2017
(73) Proprietor: Prysmian S.p.A., 20126 Milano (IT)
(72) Inventor: LE DISSEZ, Arnaud, I-20126 Milano (IT); MATHIEU, Clement, I-20126 Milano (IT); FERRER, Jean Paul, I-20126 Milano (IT)
(74) Representative: Maccalli, Marco
(86) International application number: PCT/EP2014/058080
(87) International publication number: WO 2015/161863

(56) References cited:
- EP-A1- 0 520 366
- WO-A1-02/070386
- FR-A1- 2 814 246
- GB-A- 2 224 259
- US-A- 3 389 868
- US-A- 4 840 449
- US-A1- 2008 037 945
- US-B1- 7 072 560

## Description

### BACKGROUND OF THE INVENTION

### Field of the Invention

The present invention generally relates to the field of cable delivering, in particular it relates to a shipment container for delivering wound cables.

### Description of the related art

Electrical, power or communications cables are typically manufactured by processes having a take up end section by which the finished cable is wound on a main drum. Usually, each main drum may contain some kilometres of length.

The main drum may be directly delivered (for example for submarine installations), or the finished cable can be cut to desired cable length portions to be delivered.

In order to deliver a desired cable portion from the finished cable, the latter is unwound from the main drum and progressively wound in a smaller drum or in a shipment container; once the desired cable length has been reached, the cable is cut, and the shipment container (or the smaller drum) is delivered.

Making reference to the case in which the cable portion is wound in a smaller drum, for unwinding the cable portion from the latter, typically, such drum is put in rotation and the cable is unwound from a direction perpendicular to the rotating axis. This method allows cable extraction without significant twisting, but drums need special devices for putting them in rotation and, therefore, this method results expensive and useable for special installations only.

Unwinding cables methods from shipment container need instead that cables are wound in a stack of coils and extracted by pulling them along a direction parallel to the axis of the stacked circular coils through an opening of the shipment container. However, with said method the cable becomes twisted lengthwise as it is withdrawn, since every time a coil of the wound cable is withdrawn from the shipment container, a full 360° degree twist is formed in the cable. The presence of multiple full 360° degree twists makes the cable difficult to handle, greatly hindering the operations for the installation thereof. Moreover, such twists may cause the formation of possible kinks capable of damaging the cable, especially if the cable is an optical cable.

US 2011/0284682 discloses a container for dispensing electrical or communications cables comprising an external carton which receives a reel of cable and is supported by left and right supports. A continuous axial passageway through the container extends through the left panel of the carton, the left support, the spindle of the reel, the right support, and the right panel of the carton so that an elongate connecting rod may be passed through the container.

### SUMMARY OF THE INVENTION

The Applicant experienced that the some of the prior art solutions require the presence of rotatable elements onto which the cable has to be wound/unwound.

In particular, the Applicant has also perceived that according to the solution disclosed in US 2011/0284682, the cable is wound along a direction that is perpendicular to the rotation axis of the reel(s). Such solution is only suitable for being employed with cables having at least one end that is free, *i.e.,* it is not suitable for being employed with cables having both the ends which are already connected to anything or otherwise need to be accessible.

During the operations carried out to enclose a cable in a shipment container, typically one end of the cable is not free, being connected to a portion still wound around the main drum at the manufacturing plant (the cable is cut only after that the desired cable length has been already housed in the shipment container). Depending on the type of the cable, and depending on the application it is destined to, it is possible that also the other end of the cable is not free during the operations carried out to enclose it in a shipment container. For example, as it is well known to those skilled in the art, fibre-optic cables are often delivered with an end thereof that is pre-connected to a corresponding rack panel box or the like. Therefore, during the operations to enclose a fibre-optic cable pre-connected to a rack panel box in a shipment container, both the ends thereof are not free, and the solution disclosed in US 2011/0284682 is not suitable to be employed.

Moreover, since the solution disclosed in US 2011/0284682 allows to extract the wound cable by pulling it along a direction which is tangential to the cable coils (*i.e.,* perpendicular to the rotation axis of the reel(s)), only an end thereof is accessible during the extraction from the shipment container.

US 2008/0037945 A1 discloses a shipment container for delivering a wound cable according to the preamble of claim 1.

In view of the above, the Applicant has tackled the problem of providing a solution for a low-cost shipment container for delivering a wound cable, which enables a cable extraction without causing the formation of twists and enables access to both the ends of the cable, and which is also suitable to be employed with cables that are wound with both the ends thereof that are not free, such as for example in case of fibre-optic cables pre-connected to a rack panel box.

The Applicant found that by winding a cable through figure-of-eight windings, to obtain figure-of-eight coils, it is possible to store the cable in a shipment container in a way that allows to extract the cable from the shipment container along a direction which is substantially perpendicular to the coils without causing the formation of twists. Indeed, the Applicant has observed that for each extracted portion of the cable corresponding to a figure-of-eight coil, the cable is firstly subjected to a first full (positive) 360° twist and subsequently subjected to a second full (negative) -360° degree twist which compensates for the first full 360° degree twist.

An aspect of the present invention provides for a shipment container for delivering a wound cable according to claim 1. The shipment container comprises a bottom wall, side walls extending from the bottom wall to form a compartment having a top opening facing the bottom wall, a first post member, and a second post member extending from the bottom wall toward the top opening. The shipment container is configured to allow the cable to be inserted into and extracted from the shipment container through the top opening and to be wound by figure-of-eight windings around the first post member and the second post member.

At least one among the first post member and the second post member is hollow and is provided with a corresponding post member top opening facing the top opening to allow ends of the cable to be inserted thereinto.

According to an embodiment of the present invention, the first post member and the second post member extend perpendicularly to the bottom wall.

According to an embodiment of the present invention, the first post member and the second post member have a cylindrical shape.

According to an embodiment of the present invention, the shipment container comprises a cover configured to cover the top opening for closing the compartment.

The shipment container comprises a wound cable. Said cable is arranged to comprise a sequence of stacked figure-of-eight coils wound around the first post member and the second post member.

At least one end of the cable is inserted inside the first post member or the second post member, or an end of the cable is inserted inside the first post member and another end of the cable is inserted inside the second post member.

Said ends of the cable comprise a cable head comprising a rack panel box.

According to an embodiment of the present invention, the cable is an optical cable.

Another aspect of the present invention according to claim 6 relates to a method to wind a cable inside a shipment container. The method comprises inserting the cable into the shipment container through the top opening along a direction substantially perpendicular to the bottom wall, and, while inserting the cable through the top opening, carrying out a sequence of figure-eight windings around both the post members so as to form a corresponding sequence of stacked figure-eight coils wound around the first post member and the second post member.

The method further comprises inserting at least one end of the cable inside a corresponding post member after the formation of the sequence of stacked figure-eight coils.

Another aspect of the present invention according to claim 7 relates to a method to extract a cable from a shipment container. The method comprises extracting the cable from the shipment container through the top opening along a direction substantially perpendicular to the bottom wall.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

### Brief description of the drawings

These and other features and advantages of the present invention will be made evident by the following description of some exemplary and non-limitative embodiments thereof, to be read in conjunction with the attached drawings, wherein:
**Figure 1A** is a perspective view of a shipment container according to an embodiment of the present invention;
**Figure 1B** is a top view of the shipment container of **Figure 1A**;
**Figures 2A-2H** illustrate an example of how a cable is wound in the shipment container of **Figures 1A** and **1B** according to an embodiment of the present invention

### DETAILED DESCRIPTION

For the purposes of the present description and claims an optical cable is deemed to be any optical cable comprising one or more optical fiber units, an outer sheath and, optionally, strength members.

A fiber unit is defined as an assembly comprising one (or more) optical fiber(s) and an outer element surrounding said optical fiber(s) in order to protect the overall optical fiber(s) from damage. An optical fiber is typically constituted by a glass core, a glass cladding and a single or dual coating layer.

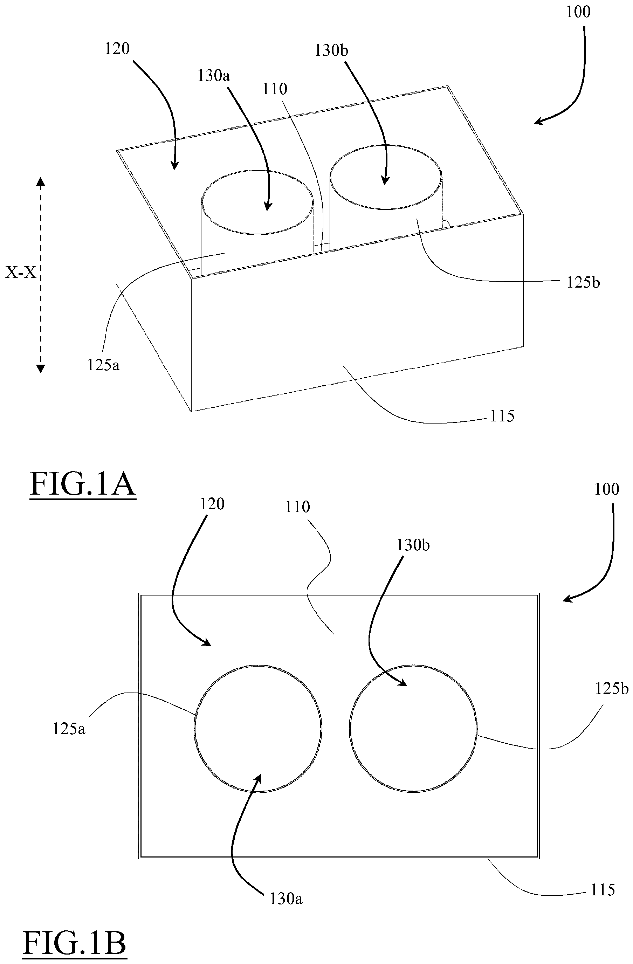

With reference to the drawings, **Figures 1A** is a perspective view of a shipment container **100** for delivering wound cables according to an embodiment of the present invention. **Figure 1B** is a top view of the shipment container **100** of **Figure 1A****.**

The shipment container **100** illustrated in **Figures 1A** and **1B** comprises a rectangular bottom wall **110** and four rectangular side walls **115** extending from the sides of the bottom wall **100** along a direction **X-X** perpendicular to the latter, so as to form a compartment having a top opening **120** (defined by the side walls **115**) facing (*e.g*., parallel to) the rectangular bottom wall **110.** Although the illustrated shipment container **100** has the shape of a parallelepiped box, the concepts of the present invention may be also applied to shipment containers **100** having different shapes. A cover (not illustrated in **Figures 1A** and **1B**) may be provided to close the top opening **120** for protecting the wound cable. The shipment container **100** may be advantageously made of a cheap and light material, such as for example cardboard.

According to an embodiment of the present invention, the shipment container **100** comprises two post members **125a**, **125b** protruding from the bottom wall **110** and extending toward the top opening **120.** Preferably, the first post member **125a** and the second post member **125b** extend perpendicularly to the bottom wall **110.**

The post members **125a**, **125b** are configured in such a way that a cable may be wound up around them in the way that will be described in detail in the following of the description. In the embodiment of the invention illustrated in the figures, the post members **125a**, **125b** have a cylindrical shape; however, similar considerations apply to post members **125a**, **125b** having a different shape, such as for example a prismatic shape.

According to an embodiment of the invention, at least one of the post members **125a**, **125b** is hollow and is provided with a corresponding top opening **130a**, **130b** facing the top opening **120** of the shipment container **100**, through which the inside of the at least one of the post members **125a**, **125b** can be reached. Preferably, both the post members **125a**, **125b** are hollow and provided with the top openings **130a**, **130b.**

Advantageously, the post members **125a**, **125b** may be made in the same material of the other components of the shipment container **100**, *e.g*., cardboard.

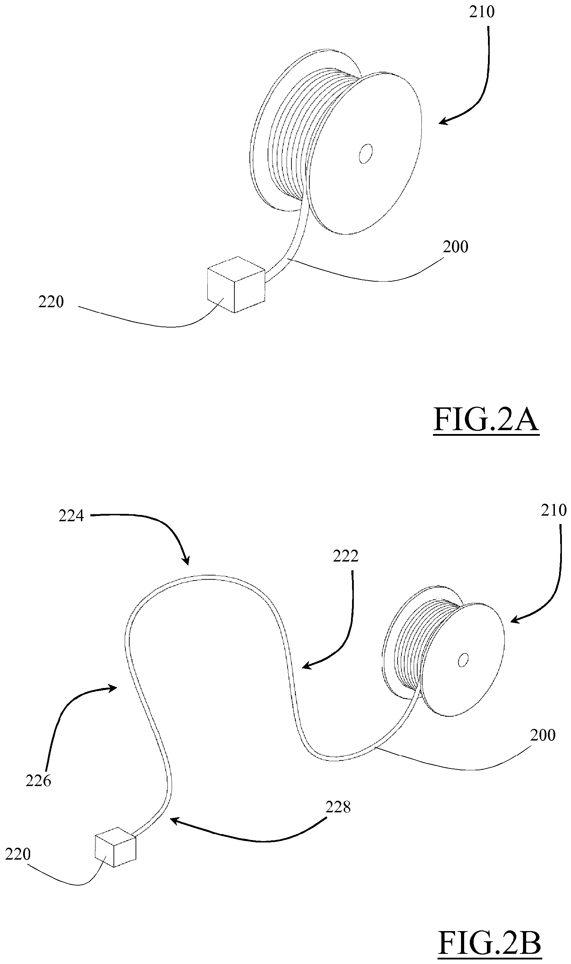

In order to describe an example of how a cable is wound in the shipment container **100** according to an embodiment of the present invention, reference will be made to the following **Figures 2A** to **2H****.**

In the considered example, the cable to be delivered in the shipment container **100**, identified in the figures with the reference **200**, is an optical cable. However, the concepts of the present invention may be applied as well to any electrical, power or communications cable.

The cable **200** to be inserted in the shipment container **100** is initially stored at the manufacturing plant, for example wound around a rotatable drum **210.** The free end of the cable **200** is firstly connected to a rack panel box, forming the cable head **220** of the cable **200**, and then a first cable length (*e.g.,* of one or two tens of meters) is unrolled from the drum **210** (see **Figure 2A**), such as for example 15 meters.

At this point, as illustrated in the example of **Figure 2B**, while the cable head **220** is kept at the ground level, a portion of the unrolled cable **200** is raised above the ground level - for example by means of a cable tray apparatus (not illustrated) - by an amount of few meters (*e.g.,* 4 meters). In this way, the unrolled cable **200** exhibits (in sequence from the drum **210** toward the cable head **220**): an upward portion **222**, a raised portion **224**, a downward portion **226,** and a terminal portion **228**, the latter portion being at the ground level.

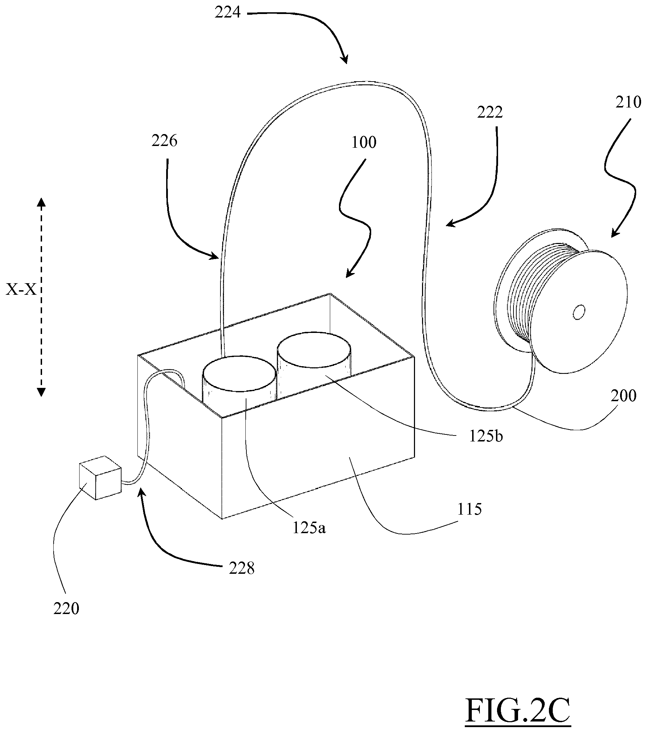

The shipment container **100** is then placed at the ground level under the end of the downward portion **226** of the cable **200**, in such a way that such downward portion **226** happens to enter in the shipment container **100** (preferably between the post members **125a**, **125b**) along a direction that is substantially parallel to the direction **X-X** (see the example of **Figure 2C**).

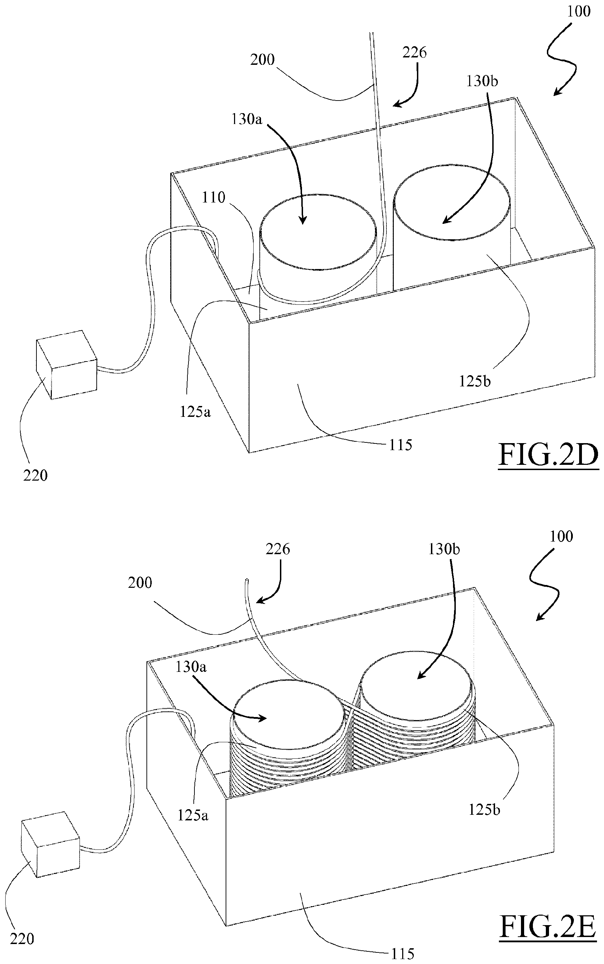

At this point, an operator (not illustrated in the figures) passes the cable **200** (*i.e.,* the downward portion **226** thereof) around a post member, such as the post member **125a** (see the example of **Figure 2D**).

The first winding of the cable **200** around the post member **125a** is followed by several figure-eight windings around both the post members **125a**, **125b** (see **Figure 2E**). As successive figure-eight windings are carried out, further cable length is unrolled from the drum **210**, entering in the shipment container **100** through the top opening **120** thereof. In this way, the cable **200** is inserted in the shipment container **100** through the top opening **120** and wound around the post members **125a**, **125b** by a sequence of figure-eight windings inside the shipment container **100.** Such sequence of figure-eight windings causes the formation of a corresponding sequence of figure-eight coils, with the first figure-eight coil that is at the lowest level, and the subsequent figure-eight coils that progressively stacks above the previous ones during the winding process.

The winding process illustrated in **Figure 2E** is repeated until the desired cable length is reached.

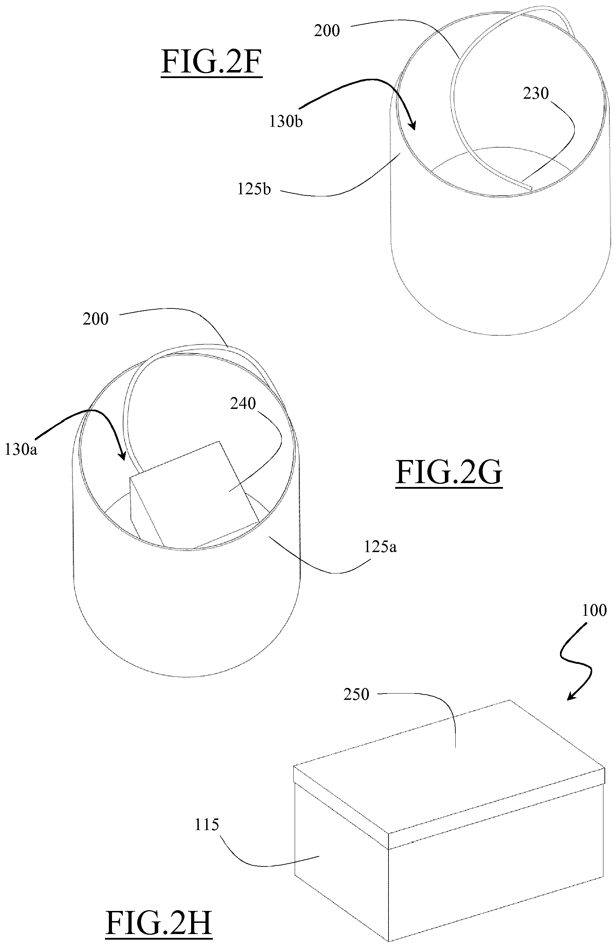

At this point, the cable **200** is cut for being separated from the drum **210**, forming a corresponding free end **230.** According to an embodiment of the invention illustrated in **Figure 2F**, such free end **230** is inserted in the post member **125b** interior through the top opening **130b.**

The next step provides for packing the cable head **220** in a corresponding box **240**, such as for example a cardboard box, and then inserting the box **240** inside the post member **125a** interior through the top opening **130a** (see **Figure 2G**).

The last step provides for closing the top opening **120** of the shipment container **100** with a cover **250** (see **Figure 2H**). At this point, the closed shipment container **100** may be delivered to the place wherein the cable **200** has to be installed.

The shipment container **100** according to the present invention has several advantages with respect to the containers known in the art.

With the shipment container **100** according to an embodiment of the present invention the cable **200** is wound around the post members **125a**, **125b** along a direction which is substantially parallel the direction **X-X**, *i.e.,* along a direction which is substantially perpendicular to the figure-eight coils that are formed during the winding process. In order to extract the cable **200** from the shipment container **100**, the cable is extracted through the top opening **120** thereof by pulling the cable **200** along a direction which is again substantially parallel to the direction **X-X**, *i.e.,* along a direction which is substantially perpendicular the figure-eight coils of the wound cable **200** inside the shipment container **100.** Thanks to the peculiar shape of such figure-eight coils, for each extracted portion of the cable **200** corresponding to a figure-eight coil, the cable is firstly subjected to a first full (positive) 360° degree twist - caused by the cable **200** winding around a post member **125a** - and subsequently subjected to a second full (negative) -360° degree twist - caused by the cable **200** winding around the other post member **125b** -, which cancels the first full 360° degree twist. Therefore, with the proposed shipment container **100**, during the extraction of the cable, the overall twist the cable **200** is subject to is null. Being not affected by twists, the cable **200** extracted from the shipment container **100** according to the present invention may be easily handled, facilitating the subsequent operations for installing the cable **200.**

Another advantage of the shipment container **100** according to an embodiment of the invention is that the cable **200** may be wound thereinto even if the two ends of the cable **200** are not free.

Moreover, with the proposed solution, once the shipment container **100** comprising the wound cable **200** is delivered to the place wherein the cable **200** has to be installed, both the two ends of the cable **200** are advantageously directly accessible without having to unwound the cable **200.** For example, an operator may directly extract the box **240** including the cable head **220** from the inside of the post member **125a,** open the box **240** for extracting the cable head **220**, and install the cable head **220** in the desired location without having to unwind the cable **200.**

The shipment container **100** according to an embodiment of the present invention is simple and cheap, lacking of movable elements (such as the rotatable reels of the known solutions). Moreover, the shipment container **100** may be made of a cheap and light material.

Furthermore, with the proposed solution, the cable **200** may be rapidly wound in the shipment container **100** with ease. For example, with the proposed solution, a single operator may be capable of wound a cable length of about 100 meters in less than 15 minutes.

Naturally, in order to satisfy local and specific requirements, a person skilled in the art may apply to the solution described above many logical and/or physical modifications and alterations.

For example, although in the present description reference has been made to a shipment container **100** provided with post members **125a, 125b** that protrude from the bottom wall **110** of the shipment container **100** and extend along a direction **X-X** that is exactly perpendicular to the bottom wall **110** itself, the concepts of the present invention may be applied as well if the post members extend along a direction **X-X** that is slanted with respect to the perpendicular to the bottom wall **110.** Moreover, similar considerations apply if each post member **125a, 125b** extends along a respective different direction, such as for example if the post members **125a, 125b** diverge to each other.

## Claims

1. A shipment container **(100)** for delivering a wound cable **(200)**, the shipment container **(100)** comprising:
- a bottom wall **(110);**
- side walls **(115)** extending from the bottom wall **(100)** to form a compartment having a top opening **(120)** facing the bottom wall **(110)**;
- a first post member **(125a)** and a second post member **(125b)** extending from the bottom wall **(110)** toward the top opening **(120)**,
wherein:
- the shipment container **(100)** is configured to allow the cable (200) to be inserted into and extracted from the shipment container **(100)** through the top opening **(120)** and to be wound by figure-of-eight windings around the first post member **(125a)** and the second post member **(125b);**
- the shipment container **(100)** further comprises the cable **(200)**, said cable **(200)** being arranged to comprise a sequence of stacked figure-eight coils wound around the first post member **(125a)** and the second post member **(125b),**
**characterized in that**
- at least one among the first post member **(125a)** and the second post member **(125b)** is hollow and is provided with a corresponding post member top opening **(130a, 130b)** facing the top opening **(120)** to allow ends of the cable **(200)** to be inserted thereinto;
- at least one end of the cable **(200)** is inserted inside the first post member **(125a)** or the second post member **(125b)**, or an end of the cable **(200)** is inserted inside the first post member **(125a)** and another end of the cable **(200)** is inserted inside the second post member **(125b)**, and
- said ends of the cable **(200)** comprise a cable head **(220)** comprising a rack panel box.

2. The shipment container **(100)** of claim 1, wherein the first post member **(125a)** and the second post member **(125b)** extend perpendicularly to the bottom wall **(110).**

3. The shipment container **(100)** of any one among the preceding claims, wherein the first post member **(125a)** and the second post member **(125b)** have a cylindrical shape.

4. The shipment container **(100)** of any one among the preceding claims, further comprising a cover **(250)** configured to cover the top opening **(120)** for closing the compartment.

5. The shipment container **(100)** of any one among the preceding claims, wherein the cable **(200)** is an optical cable.

6. A method to wind a cable **(200)** inside a shipment container **(100)** for delivering a wound cable, wherein ends of the cable **(200)** comprise a cable head **(220)** comprising a rack panel box, the shipment container comprising:
- a bottom wall **(110);**
- side walls **(115)** extending from the bottom wall **(100)** to form a compartment having a top opening **(120)** facing the bottom wall **(110)**;
- a first post member **(125a)** and a second post member **(125b)** extending from the bottom wall **(110)** toward the top opening **(120)**, wherein:
- the shipment container **(100)** is configured to allow the cable **(200)** to be inserted into and extracted from the shipment container **(100)** through the top opening **(120)** and to be wound by figure-of-eight windings around the first post member **(125a)** and the second post member **(125b)**, and
- at least one among the first post member **(125a)** and the second post member **(125b)** is hollow and is provided with a corresponding post member top opening **(130a, 130b)** facing the top opening **(120)** to allow ends of the cable **(200)** to be inserted thereinto,
the method comprising:
- inserting the cable **(200)** into the shipment container **(100)** through the top opening **(120)** along a direction **(X-X)** substantially perpendicular to the bottom wall **(110)**;
- while inserting the cable **(200)** through the top opening **(120)**, carrying out a sequence of figure-eight windings around both the post members **(125a, 125b)** so as to form a corresponding sequence of stacked figure-eight coils wound around the first post member **(125a)** and the second post member **(125b)**;
- after the formation of the sequence of stacked figure-eight coils, inserting at least one end of the cable **(200)** comprising the cable head **(220)** comprising the rack panel box inside a corresponding post member **(125a**, **125b).**

7. A method to extract a cable **(200)** from the shipment container **(100)** according to any one among claims 1 to 5, the method comprising extracting the cable **(200)** from the shipment container **(100)** through the top opening **(120)** along a direction **(X-X)** substantially perpendicularly to the bottom wall **(110).**

## Patentansprüche

1. Versandbehälter (100) zum Liefern eines aufgewickelten Kabels (200), wobei der Versandbehälter (100) umfasst:
- eine Bodenwand (110);
- Seitenwände (115), die sich von der Bodenwand (100) erstrecken, um einen Raum mit einer oberen Öffnung (120) zu bilden, die zu der Bodenwand (110) ausgerichtet ist;
- ein erstes Pfostenelement (125a) und ein zweites Pfostenelement (125b), die sich von der Bodenwand (110) in Richtung der oberen Öffnung (120) erstrecken,
wobei:
- der Versandbehälter (100) zur Ermöglichung ausgelegt ist, das Kabel (200) durch die obere Öffnung (120) in den Versandbehälter (100) einzusetzen und daraus zu entnehmen und es in Wicklungen in der Form einer 8 um das erste Pfostenelement (125a) und das zweite Pfostenelement (125b) zu wickeln;
- der Versandbehälter (100) des Weiteren das Kabel (200) umfasst, wobei das Kabel (200) so ausgelegt ist, dass es eine Sequenz aus übereinandergestapelten Wicklungen in der Form einer 8 umfasst, die um das erste Pfostenelement (125a) und das zweite Pfostenelement (125b) gewickelt sind,
**dadurch gekennzeichnet, dass**
- mindestens eines aus dem ersten Pfostenelement (125a) und dem zweiten Pfostenelement (125b) hohl ist und mit einer entsprechenden oberen Pfostenelementöffnung (130a, 130b) versehen ist, die zu der oberen Öffnung (120) hin ausgerichtet ist, so dass Enden des Kabels (200) dort hinein eingesetzt werden können;
- mindestens ein Ende des Kabels (200) in das erste Pfostenelement (125a) oder das zweite Pfostenelement (125b) eingesetzt ist, oder ein Ende des Kabels (200) in das erste Pfostenelement (125a) eingesetzt ist und ein anderes Ende des Kabels (200) in das zweite Pfostenelement (125b) eingesetzt ist, und
- die Enden des Kabels (200) einen Kabelanschluss (220) umfassend einen Einschubsteckkasten umfassen.

2. Versandbehälter (100) nach Anspruch 1, wobei sich das erste Pfostenelement (125a) und das zweite Pfostenelement (125b) lotrecht zu der Bodenwand (110) erstrecken.

3. Versandbehälter (100) nach einem der vorhergehenden Ansprüche, wobei das erste Pfostenelement (125a) und das zweite Pfostenelement (125b) eine zylindrische Form aufweisen.

4. Versandbehälter (100) nach einem der vorhergehenden Ansprüche, des Weiteren umfassend eine Abdeckung (250), die dazu ausgelegt ist, die obere Öffnung (120) abzudecken, um den Raum zu schließen.

5. Versandbehälter (100) nach einem der vorhergehenden Ansprüche, wobei das Kabel (200) ein Lichtleitkabel ist.

6. Verfahren zum Aufwickeln eines Kabels (200) in einem Versandbehälter (100) zum Liefern eines aufgewickelten Kabels, wobei die Enden (200) einen Kabelanschluss (220) umfassend einen Einschubsteckkasten umfassen, wobei der Versandbehälter umfasst:
eine Bodenwand (110);
- Seitenwände (115), die sich von der Bodenwand (100) erstrecken, um einen Raum mit einer oberen Öffnung (120) zu bilden, die zu der Bodenwand (110) ausgerichtet ist;
- ein erstes Pfostenelement (125a) und ein zweites Pfostenelement (125b), die sich von der Bodenwand (110) in Richtung der oberen Öffnung (120) erstrecken, wobei:
- der Versandbehälter (100) zur Ermöglichung ausgelegt ist, das Kabel (200) durch die obere Öffnung (120) in den Versandbehälter (100) einzusetzen und daraus zu entnehmen und es in Wicklungen in der Form einer 8 um das erste Pfostenelement (125a) und das zweite Pfostenelement (125b) zu wickeln, und
- mindestens eines aus dem ersten Pfostenelement (125a) und dem zweiten Pfostenelement (125b) hohl ist und mit einer entsprechenden oberen Pfostenelementöffnung (130a, 130b) versehen ist, die zu der oberen Öffnung (120) hin ausgerichtet ist, so dass Enden des Kabels (200) dort hinein eingesetzt werden können,
wobei das Verfahren umfasst:
- Einsetzen des Kabels (200) in den Versandbehälter (100) durch die obere Öffnung (120) entlang einer Richtung (X-X), die im Wesentlichen lotrecht zu der Bodenwand (110) verläuft;
- während des Einsetzens des Kabels (200) durch die obere Öffnung (120), Ausführen einer Folge von Wicklungen in der Form einer 8 um die beiden Pfostenelemente (125a, 125b), um eine entsprechende Folge von gestapelten Wicklungen in der Form einer 8 zu bilden, die um das erste Pfostenelement (125a) und das zweite Pfostenelement (125b) gewickelt sind;
- nach dem Bilden der Folge von gestapelten Wicklungen in der Form einer 8, Einsetzen von mindestens einem Ende des Kabels (200), das den Kabelanschluss (220) umfassend den Einschubsteckkasten umfasst, in ein entsprechendes Pfostenelement (125a, 125b).

7. Verfahren zum Entnehmen eines Kabels (200) aus dem Versandbehälter (100) nach einem der Ansprüche 1 bis 5, wobei das Verfahren das Entnehmen des Kabels (200) aus dem Versandbehälter (100) durch die obere Öffnung (120) entlang einer Richtung (X-X) umfasst, die im Wesentlichen lotrecht zu der Bodenwand (110) verläuft.

## Revendications

1. Conteneur d'expédition (100) pour fournir un câble enroulé (200), le conteneur d'expédition (100) comprenant :
- une paroi inférieure (110) ;
- des parois latérales (115) s'étendant à partir de la paroi inférieure (100) pour former un compartiment ayant une ouverture supérieure (120) faisant face à la paroi inférieure (110) ;
- un premier élément formant montant (125a) et un second élément formant montant (125b) s'étendant à partir de la paroi inférieure (110) vers l'ouverture supérieure (120),
dans lequel :
- le conteneur d'expédition (100) est configuré pour permettre au câble (200) d'être inséré dans le et extrait du conteneur d'expédition (100) à travers l'ouverture supérieure (120) et d'être enroulé par enroulements en forme de huit autour du premier élément formant montant (125a) et du second élément formant montant (125b) ;
- le conteneur d'expédition (100) comprend en outre le câble (200), ledit câble (200) étant agencé pour comprendre une séquence de spires en forme de huit empilées enroulées autour du premier élément formant montant (125a) et du second élément formant montant (125b),
**caractérisé en ce que**
- au moins l'un parmi le premier élément formant montant (125a) et le second élément formant montant (125b) est creux et est doté d'une ouverture supérieure d'élément formant montant (130a, 130b) correspondante faisant face à l'ouverture supérieure (120) pour permettre aux extrémités du câble (200) d'être insérées à l'intérieur de celle-ci ;
- au moins une extrémité du câble (200) est insérée à l'intérieur du premier élément formant montant (125a) ou du second élément formant montant (125b), ou une extrémité du câble (200) est insérée à l'intérieur du premier élément formant montant (125a) et une autre extrémité du câble (200) est insérée à l'intérieur du second élément formant montant (125b), et
- lesdites extrémités du câble (200) comprennent une tête de câble (220) comprenant un boîtier de panneau de rack.

2. Conteneur d'expédition (100) selon la revendication 1, dans lequel le premier élément formant montant (125a) et le second élément formant montant (125b) s'étendent perpendiculairement à la paroi inférieure (110) .

3. Conteneur d'expédition (100) selon l'une quelconque parmi les revendications précédentes, dans lequel le premier élément formant montant (125a) et le second élément formant montant (125b) ont une forme cylindrique.

4. Conteneur d'expédition (100) selon l'une quelconque parmi les revendications précédentes, comprenant en outre un couvercle (250) configuré pour couvrir l'ouverture supérieure (120) pour fermer le compartiment.

5. Conteneur d'expédition (100) selon l'une quelconque parmi les revendications précédentes, dans lequel le câble (200) est un câble optique.

6. Procédé d'enroulement d'un câble (200) à l'intérieur d'un conteneur d'expédition (100) pour fournir un câble enroulé, dans lequel les extrémités du câble (200) comprennent une tête de câble (220) comprenant un boîtier de panneau de rack, le conteneur d'expédition comprenant :
- une paroi inférieure (110) ;
- des parois latérales (115) s'étendant à partir de la paroi inférieure (100) pour former un compartiment ayant une ouverture supérieure (120) faisant face à la paroi inférieure (110) ;
- un premier élément formant montant (125a) et un second élément formant montant (125b) s'étendant à partir de la paroi inférieure (110) vers l'ouverture supérieure (120), dans lequel
- le conteneur d'expédition (100) est configuré pour permettre au câble (200) d'être inséré dans le et extrait du conteneur d'expédition (100) à travers l'ouverture supérieure (120) et d'être enroulé par enroulements en forme de huit autour du premier élément formant montant (125a) et du second élément formant montant (125b), et
- au moins l'un parmi le premier élément formant montant (125a) et le second élément formant montant (125b) est creux et est doté d'une ouverture supérieure d'élément formant montant (130a, 130b) correspondante faisant face à l'ouverture supérieure (120) pour permettre aux extrémités du câble (200) d'être insérées à l'intérieur de celle-ci,
le procédé comprenant :
- l'insertion du câble (200) dans le conteneur d'expédition (100) à travers l'ouverture supérieure (120) le long d'une direction (X - X) sensiblement perpendiculaire à la paroi inférieure (110) ;
- lors de l'insertion du câble (200) à travers l'ouverture supérieure (120), la réalisation d'une séquence d'enroulements en forme de huit autour des deux éléments formant montants (125a, 125b) de sorte à former une séquence correspondante de spires en forme de huit empilées enroulées autour du premier élément formant montant (125a) et du second élément formant montant (125b) ;
- après la formation de la séquence de spires en forme de huit empilées, l'insertion d'au moins une extrémité du câble (200) comprenant la tête de câble (220) comprenant le boîtier de panneau de rack à l'intérieur d'un élément formant montant (125a, 125b) correspondant.

7. Procédé pour extraire un câble (200) du conteneur d'expédition (100) selon l'une quelconque parmi les revendications 1 à 5, le procédé comprenant l'extraction du câble (200) du conteneur d'expédition (100) à travers l'ouverture supérieure (120) le long d'une direction (X - X) sensiblement perpendiculairement à la paroi inférieure (110).
